# EUROPEAN PATENT APPLICATION

(11) **EP 2 572 847 A1**
(43) Date of publication of application: **27.03.2013**
(21) Application number: 11182418.1
(22) Date of filing: 22.09.2011
(51) Int. Cl.: B28B 1/54, B28B 7/34, C04B 28/36

(54) **Process for shaping a sulphur cement product**

(71) Applicant: Shell Internationale Research Maatschappij B.V., 2596 HR Den Haag (NL)
(72) Inventor: Al-Ansary, Marwa, Khoo Boo Teck Teck (QA)
(74) Representative: Matthezing, Robert Maarten

(57) **Abstract**

The present invention provides a process for shaping a sulphur cement product comprising cooling a molten sulphur cement product in a mould, wherein the mould is a glass reinforced polymer mould. The present invention also provides a sulphur cement product produced using the process of the present invention.

## Description

### Field of the Invention

This invention relates to a process for shaping a sulphur cement product.

### Background of the Invention

Sulphur may be used as an alternative for Portland cement as binder material in construction materials. Sulphur based construction materials, such as sulphur cement and sulphur concrete have distinctive advantages over their Portland cement based counterparts. Sulphur based construction materials are strong, acid and salt resistant and thus applicable in many fields of industry including those where contact with aggressive environments is anticipated. Typical fields of application include building blocks, bricks, tiles, floors, coatings, foundations, acid reservoirs, etc.

Sulphur cement is a thermoplastic material that typically melts at temperatures in the range of from 115 to 125 °C, depending on its exact composition. Upon cooling, the liquid sulphur cement re-solidifies at temperatures below the melting temperature.

The ability to melt and subsequently re-solidify allows for the convenient shaping of sulphur cement. A typical process for shaping sulphur cement is moulding.

Steel moulds are commonly used for shaping sulphur cement products, but they suffer from the disadvantage of taking a long time to heat up in an oven to the required temperature (typically over 120°C), hence making the moulding process slower and more costly than would be desirable. It would therefore be desirable to provide a mould which takes less time to heat up to the required temperature. It is also important for the mould to dispel its heat after being heated, such that it doesn't insulate too much. At the same time as having good heating and insulating properties, it is also important that the mould enables sulphur cement products to be obtained which have good surface finish without surface defects and irregularities.

CA2267860 discloses a process for preparing sulphur comprising concrete blocks, wherein a mixture of powdered sulphur and sand having temperature of 110°C (230°F) are moulded and compressed in a urethane mould.

FR2773340 discloses a process for preparing concrete elements using a mould. The mould is formed out of a deformable, flexible plastic material such as polyurethane, silicone or others. FR2773340 does not disclose the dimensions of the mould or its use at elevated temperatures. According to FR2773340, the obtained concrete elements show surface defects and irregularities similar to traditionally produced elements.

There is a need in the art for an improved process for producing shaped objects of sulphur cement and/or sulphur concrete, in particular by using a mould which can be quickly heated to the required temperature while providing a sulphur cement product having a good surface finish, i.e. a smooth surface.

### Summary of the Invention

According to the present invention there is provided a process for shaping a sulphur cement product comprising cooling a molten sulphur cement product in a mould, wherein the mould is a glass reinforced polymer mould. It has now been found that when the mould is made of glass reinforced polymer it may be heated up to the required temperature (typically around 120°C) much more quickly than a traditional steel mould. In addition, it has been found that a glass reinforced mould provides sulphur cement products which have a good surface finish.

### Detailed Description of the Figures

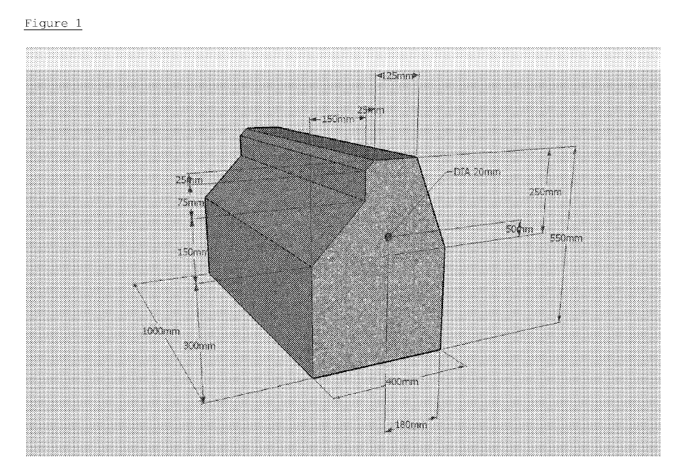

Figure 1 shows the glass-reinforced polyester mould used in Example 2.

### Detailed Description of the Invention

Reference herein to a sulphur cement product is to sulphur cement or to a sulphur cement containing material, i.e. to a material at least containing elemental sulphur and a filler. Examples of sulphur cement containing materials are sulphur cement premix compositions and sulphur cement-aggregate composites such as sulphur mortar, sulphur concrete or sulphur-extended asphalt.

In the process according to the invention a molten sulphur cement product is cooled in a mould. The mould used in the present invention is made from glass reinforced polymer.

Glass-reinforced polymer is made of a polymer matrix reinforced by fine fibers of glass and is a lightweight, extremely strong and robust material. Its bulk strength and weight properties are very favourable when compared to metals. The polymer matrix can be selected from epoxy, a thermosetting plastic such as polyester or vinylester, or thermoplastic.

An individual structural glass fiber is both stiff and strong in tension and compression, that is, along its axis. Although it might be assumed that the fiber is weak in compression, it is actually only the long aspect ratio of the fiber which makes it seem so; i.e. because a typical fiber is long and narrow, it buckles easily. On the other hand, the glass fiber is unstiff and unstrong in shear, that is, across its axis. Therefore if a collection of fibers can be arranged permanently in a preferred direction within a material, and if the fibers can be prevented from buckling in compression, then that material will become preferentially strong in that direction.

Furthermore, by laying multiple layers of fiber on top of one another, with each layer oriented in various preferred directions, the stiffness and strength properties of the overall material can be controlled in an efficient manner. In the case of fibreglass, it is the polymer matrix which permanently constrains the structural glass fibers to directions chosen by the designer.

Typical materials for use in the glass reinforced polymer include, but are not limited to, polyester and chopped strand mat laminate, polyester and woven rovings laminate, polyester and satin weave cloth laminate, polyester and continuous rovings laminate and epoxy composites. A preferred material for use in the glass reinforced polymer herein is polyester and woven rovings laminate.

Table 1 below shows some properties of some typical fibreglass materials.

**Table 1**

| Material | Specific Gravity | Tensile Strength | Compressive Strength |
|---|---|---|---|
| | | (MPa) | (MPa) |
| Polyester resin (unreinforced) | 1.28 | 55 | 140 |
| Polyester and Chopped Strand Mat Laminate 30% E-glass¹ | 1.4 | 100 | 150 |
| Polyester and Woven Rovings Laminate 45% E-glass¹ | 1.6 | 250 | 150 |
| Polyester and Satin Weave Cloth Laminate 55% E-glass¹ | 1.7 | 300 | 250 |
| Polyester and Continuous Rovings Laminate 70% E-glass¹ | 1.9 | 800 | 350 |
| E-Glass¹ Epoxy composite | 1.99 | 1,770 (257 ksi) | |
| S-Glass² Epoxy composite | 1.95 | 2,358 (342 ksi) | |

| | | | |
|---|---|---|---|
| 1. E-glass is a low alkali glass reinforcement material in polymer matrix composites with typical nominal composition of SiO₂ 54 wt%, Al₂O₃ 14 wt%, CaO + MgO 22 wt%, B₂O₃ 10 wt%, and Na₂O + K₂O less than 2 wt%. Other materials may also be present at impurity levels. 2. S-glass is a modified version of E-glass resulting in a higher stiffness material. S-glass has a typical nominal composition of SiO₂ 65 wt%, Al₂O₃ 25 wt%, MgO 10 wt%. Some other materials may also be present at impurity levels. | | | |

The mould may have any suitable shape known in the art, such as curved, cubical, spherical, cylindrical, triangular or an elongated derivative shape thereof. Typically, the mould may have an essentially cylindrical, cubical or elongated cubical shape. Such shapes may serve as tiles, bricks, building components or works of art.

Figure 1 shows typical dimensions of a suitable glass-reinforced polymer mould for use herein for making a traffic barrier.

Reference to a molten sulphur cement product is to a sulphur cement product comprising molten sulphur. Sulphur melts at a temperature in the range of from 115 to 130 °C.

Preferably, the molten sulphur cement product has a temperature in the range of from 125 to 180 °C, more preferably 125 to 145 °C. At temperatures below this range the sulphur may not melt or melt incompletely and the viscosity is too low and at higher, i.e. above 180°C, temperatures the sulphur has a tendency to polymerise, resulting in an undesired increased viscosity.

The mould may be filled with a molten sulphur cement product. Preferably, the mould is filled with a molten sulphur cement product prior to cooling.

Preferably, when the mould is filled with molten sulphur cement product, the mould is heated or preheated to a temperature close to the temperature at which the sulphur cement product is molten, preferably to a temperature in the range of from 90 to 150 °C, more preferably of from 100 to 140 °C. Preferably, the mould is heated before the mould is filled with molten sulphur cement product. When such a mould is preheated to a temperature in the range of the melt temperature of sulphur, premature solidification of the sulphur cement product at the inner surface of the mould may be prevented.

The mould may be heated using any suitable heating method, such as an oven or a hot air blower. When manufacturing large items such as traffic barriers, preferably the mould is heated with a hot air blower. A hot air blower is preferred for large items since the hot air blower can be used to heat up the inside walls of the mould only, and therefore this improves the overall speed, energy efficiency and cost of the process of the present invention. For tiles the mould is preferably heated in an oven. Advantageously, the mould used in the process of the present invention has the ability to heat up much more quickly than an equivalent steel mould.

In the process of the present invention, the time taken to heat up the mould depends on the specific dimensions of the mould. In general, the mould is preferably heated for a period of time in the range of from 2 minutes to 20 minutes, more preferably in the range of from 5 minutes to 15 minutes.

The sulphur cement product may be any sulphur cement containing material, i.e. a material at least containing elemental sulphur and a filler. Examples of sulphur cement containing materials are sulphur cement premix compositions and sulphur cement-aggregate composites such as sulphur mortar, sulphur concrete or sulphur-extended asphalt.

Sulphur cement is known in the art and at least comprises sulphur, usually in an amount of at least 50 wt%, and a filler.

Usual sulphur cement fillers are particulate inorganic materials with an average particle size in the range of from 0.1 µm to 0.1 mm. Examples of such sulphur cement fillers are fly ash, limestone, quartz, iron oxide, alumina, titania, graphite, gypsum, talc, mica or combinations thereof. The filler content of sulphur cement may vary widely, but is typically in the range of from 5 to 50 wt%, based on the total weight of the cement.

Sulphur cement may be plasticised by the addition of a sulphur cement modifier in the sulphur cement preparation process. Such modifiers are known in the art. Examples of such modifiers are aliphatic or aromatic polysulphides or compounds that form polysulphides upon reaction with sulphur. Examples of compounds that form polysulphides are naphthalene or olefinic compounds such as 5-ethylene-2-norbornene (ENB) or 5-vinyl-2-norbornene (VNB), dicyclopentadiene, limonene or styrene. A preferred sulphur modifier for use herein is a bis(triethoxysilylpropyl) tetrasulphide (TESPT) coupling agent as described in WO2007/065920, WO2008/148804 and WO2008/148814.

Modifiers may be added in an amount in the range of from 0.05 to 25 wt% based on the weight of sulphur, usually in the range of from 0.1 to 10 wt%.

Reference herein to a sulphur cement premix composition is to a composition comprising a pre-reacted mixture of sulphur and a sulphur cement modifier that can suitably be used for the preparation of sulphur cement by adding sulphur and/or filler to it in the required amounts.

Reference herein to sulphur cement-aggregate composites is to a composite comprising both sulphur cement and aggregate. Examples of sulphur cement-aggregate composites are sulphur mortar, sulphur concrete and sulphur-extended asphalt. Mortar comprises fine aggregate, typically with particles having an average diameter between 0.1 and 5 mm, for example sand. Concrete comprises coarse aggregate, typically with particles having an average diameter between 5 and 40 mm, for example gravel or rock. Sulphur-extended asphalt is asphalt (typically aggregate with a binder containing filler and a residual hydrocarbon fraction), wherein part of the binder has been replaced by sulphur.

It has been found that the shaped solid sulphur cement products prepared by the process according to the invention show a good surface finish.

### Examples

The following non-limiting examples serve to illustrate the invention.

In each of the examples, unless specified otherwise, a cast mixture is used comprising 17 wt% sulphur, 0.1 wt% TESPT sulphur modifier, 11 wt% flyash as filler and 36 wt% dried sand with the balance being coarse aggregate. Both the sand and the aggregate are preheated in a dryer for 2 hours at 170-180°C. Sulphur pellets are placed in a transfer bucket and part or all of the hot sand and aggregate are placed on top of it. The sand/sulphur/aggregates are deposited in the mixer and preheated to greater than 100°C. The mix is agitated until liquid. Any remaining sand and aggregate is added to the mix. The TESPT sulphur modifier is added to the agitating mix. At least 15 minutes after sulphur modifier addition, filler is added. The mix is allowed to stir for 45 minutes before pouring.

### Example 1

Sulphur concrete tiles are prepared as follows. Glass-reinforced polyester tile moulds (mould 1) (350 x 350 x 350 mm with a 50 mm lip) are heated to a temperature of approximately 120°C in an oven. Heating takes approximately 10 minutes with the oven set at 150°C. The hot sulphur concrete mix described above is poured into the moulds, a rebar mesh is inserted and the material allowed to cool. After 1 hour, the tiles are demoulded. The resulting tiles are a commercially acceptable product and have a smooth surface finish.

### Example 2

A sulphur concrete safety barrier is prepared as follows. A glass-reinforced polyester mould as shown in Figure 1 is covered with a wooden cover that fits the open cavity of the mould which has an access hole cut into it. The inner dimensions of the safety barrier mould fits the dimensions shown in Figure 1 with an approximately 200 mm lip. The mould thickness is about 20 mm. A 2300 Watt hot air blower is inserted into the hole and rotated to evenly distribute the hot air, creating a convection oven equivalent on the interior. The interior surface is heated to about 110°C within 10 minutes. The hot sulphur concrete mix described above (with the flyash substituted for a mineral filler) is immediately poured into the mould and levelled at the top of the casting. This is allowed to cool for 12 hours before demoulding, although it could be demoulded prior to that.

The produced sulphur cement barrier has a very smooth surface finish.

## Claims

1. Process for shaping a sulphur cement product comprising cooling a molten sulphur cement product in a mould, wherein the mould is a glass reinforced polymer mould.

2. Process according to Claim 1 wherein the glass reinforced polymer is selected from a glass reinforced polyester.

3. Process according to Claim 1 or 2 wherein the mould is filled with a molten sulphur cement product prior to cooling.

4. Process according to claim 3, wherein prior to filling the mould with the molten sulphur cement product, the mould is heated to a temperature in the range of from 90 to 150 °C.

5. Process according to Claim 3 or 4, wherein prior to filling the mould with the molten sulphur cement product, the mould is heated to a temperature in the range of from 100 to 140 °C.

6. Process according to any of Claims 3 to 5, wherein prior to filling the mould with the molten sulphur cement product, the mould is heated to a temperature in the range of 120 to 140°C.

7. Process according to any of Claims 1 to 6 wherein the mould is heated in an oven.

8. Process according to any of Claims 1 to 6 wherein the mould is heated using a hot air blower.

9. Process according to any of Claims 1 to 8 wherein the mould is heated for a period of time in the range of from 2 minutes to 20 minutes.

10. Process according to any of Claims 1 to 9 wherein the mould is heated for a period of time in the range of from 5 minutes to 15 minutes.

11. Process according to any of Claims 1 to 10 wherein the glass reinforced polymer comprises polyester and woven rovings laminate.

12. Sulphur cement product produced by the process of any of Claims 1 to 11.
